# EUROPEAN PATENT APPLICATION

(11) **EP 2 839 737 A1**
(43) Date of publication of application: **25.02.2015**
(21) Application number: 13181178.8
(22) Date of filing: 21.08.2013
(51) Int. Cl.: A01K 1/03

(54) **System and method for increasing animal welfare of breeding minks**

(71) Applicant: Leeijen, Justinus Leonardus Joseph, 5986 NT Beringe (NL)
(72) Inventor: Leeijen, Justinus Leonardus Joseph, 5986 NT Beringe (NL)
(74) Representative: Janssen, Paulus J. P.

(57) **Abstract**

The present invention pertains to a system for increasing animal welfare of breeding minks kept in in a cage, comprising a semi-closed nest box in connection with the cage, wherein a drinking water supply is present in the nest box. The invention also pertains to a method of using this system.

## Description

### Field of the invention

The present invention pertains to a system for increasing animal welfare of breeding minks (*Neovison vison, Mustela vison*) kept in in a cage, comprising a semi-closed nest box in connection with the cage. Typically, the nest box is a wooden box situated at one end of the cage. The invention also pertains to a method for using this system

### Background art

In mink farming, the minks are generally kept in wired cages, placed in a shed for sheltering the minks at least partly from environmental circumstances such as direct sunlight, rain, snow, wind etc. The cages are typically placed at human working height (around 70 cm to 140 cm) to allow easy access by a human operator to conduct animal treatment and other operations needed for adequately keeping the minks. Cages meant for breeding minks are typically provided with a nest box. Such a nest box, which typically is a wooden box having four side walls and a hinged lid, is either placed within the wired cage, or against a side wall of the cage, having its entrance opening coinciding with an opening of the cage to allow minks to enter the box when present in the cage. The box is provided so that the breeding minks can rest and sleep comfortably. It is a clean environment typically having a wired bottom bedded with straw or wood shavings, and no food or water supply is present to provide optimal hygienic circumstances.

During the first weeks of its life the mink kit is completely dependent on its mother for nourishment and warmth. The neonatal mink is physiologically immature with undeveloped thermoregulation. It is born blind and naked and is therefore very vulnerable. The newborn mink has only 0.15 kJ of energy stored in liver glycogen at the time of birth, it is therefore essential for survival that suckling is established close to parturition. Provided that the mother's lactation performance and ability to care for her young support the development of the litter, the suckling kits have a tremendous growth potential. The relative growth rate of the newborn mink during the first 2 days of its life is 23% per day, averaging 9% per day until 42 days of age. This, together with the essential metabolic changes, indicates a very quick adaptation to life outside the uterus. In newborn mammals the poor thermoregulatory capacity is attributed to their high surface-to-volume ratio, making them thus more prone to heat loss, to their poor insulation and their limited ability to increase heat production. Very little is known about the thermoregulatory abilities of the neonatal mink. During early lactation, the very fine kit fur and the non-existent subcutaneous body fat reserves provide the mink very little insulation against the thermal gradient between the nest and ambient temperatures. Therefore, the thermal environment and microclimate provided by the nest box and maintained by the nursing mother are of utmost importance to the survival of the young mink. Therefore, the only possibility for the kits to avoid heat losses is to huddle together in the nest. Also, the nest box openings are often provided with a kind of cap or sluice to even further diminish environmental impact, in particular draught. For the farmed mink, food seeking is not a factor requiring the dam to leave the nest-box long enough to be hazardous for the kits, but extreme temperature conditions, possibly in combination with sub-optimal nest-box constructions, may cause single kits or even whole litters to suffer from hypo- or hyperthermia. Before homeothermy is established, neonatal animals are practically poikilothermic, and thus their body temperature and heat production (HE) will depend on environmental factors. Once the kits start to consume solid food and leave the nest, being functionally homoeothermic is crucial for survival. Limited existing data indicate that mink kits develop homoeothermy at an age of 25-35 days and are able to maintain a stable body temperature by the age of 29 days. Hypothermia and emaciation, which are both indications of the inability of the female to take care of her young, are two major causes of neonatal kit mortality.

In the art it is commonly accepted (see Rouvinen-Watt and Harri in the Journal of Thermal Biology 26, 2001, 9-14: "Observations on thermoregulatory ontogeny*"*) that the strategy of survival of mink kits depends substantiallyon the nutrition and warmth provided by the mother animal. Therefore, in order to support animal welfare (which on its turn is good for supporting fur production), circumstances are created that allow the mother animal to nourish maximally and provide optimal amounts of milk for the kits. Since kits depend on this milk for their nourishment, food and drinking water supply is provided outside of the nest box. This allows the mother to nourish on demand, and it keeps the nest box free from rotting food, and wet and damp straw or shavings.

### Object of the invention

It is an object of the invention to provide a system and method to improve welfare of the breeding minks. It is a further object to improve the circumstances for the mother animal such that she is less prone of nursing sickness, and to improve the circumstances for the kits, such that they grow better and are less aggressive to each other. It is even a further object to provide a system leading to less kit losses during the first days after whelping.

### Summary of the invention

In order to meet the object of the invention, a system according to the "field of the invention" as indicated *supra* is devised, wherein a drinking water supply is present in the nest box. Surprisingly, it was found that this attributes significantly to the animal welfare of breeding minks. Whereas in the art, it is commonly accepted that having a water supply in the nest box is not necessary since the mother animal can easily drink water outside of the box, and the kits do not need drinking water, especially not during the first weeks of their lives. Even stronger, the provision of a drinking water supply in the nest box is regarded a disadvantage for the welfare of the breeding minks since there is a severe risk of the bedding in the box becoming wet, possibly leading to microbial and fungal growth, and there is a risk that the kits switch from milk to drinking water and therefore do not increase in strength quickly enough to become homeothermic at the time when they leave the nest box. However, applicant recognised in particular that kits drinking water from the water supply, even when starting at a very young age, grow faster than kits that only have access to mother milk. The reason for this is not quite clear but may be attributed to a change in behaviour that was seen: the kits having access to drinking water in the nest box tend to be more quiet and peaceful. Apparently, the supply of water provides that they do not have to be too aggressive and competitive when it comes down to access to nourishment. This leaves more energy for growth. Another recognition was that the kits tend to stay longer in the sheltered area of the nest box. Normally, kits leave the nest boxes regularly when reaching an age of about 4 weeks, but when having a drinking water supply in the nest box, they do to a far lesser extent. This again saves energy for growth. The overall effect is that the kits grow faster but also, that there is more relief for the mother animal during lactation: the kits apparently need less milk for their growth. More relief for the mother animal inherently means less weight loss for this animal and less risk of getting nursing sickness. Overall, this means that one mother animal on average can produce more healthy kits per year.

The invention also pertains to a method of using a system as described here above wherein the water supply is provided for minks in a period during the first 6 weeks after the minks are born. Typically, it is believed that during these first 6 weeks the nest box should remain free from a water supply for reasons as stated supra. It may not be needed to have the drinking water supply in operation during this whole period of 6 weeks. Typically, when the minks are too small to move in the nest box, providing a drinking water supply is useless since it cannot be used by the kits for drinking water.

### Definitions

*Breeding minks* are the dam (mother mink) and mink kits from right after whelping until weaning of the kits.

*A semi-closed nest box* is a nest box that is closed by having at least side-walls and a top cover, to prevent or at least significantly decrease the impact of environmental circumstances, in particular wind (draught) and rain on the minks while present in the box, the nest box having at least one opening to allow a mink to leave and enter the box, and on or more optional openings to provide fittings to the inside of the box. The box may be provided with a hinged lid or otherwise openable closure to allow an operator to inspect the interior of the box and perform an operation in the box.

*A drinking nipple* is a device having a regulated opening for discharging drinking water on demand. Typically, a drinking nipple comprises a short extension of a tubing to which a nozzle is attached or incorporated, which nozzle can be actuated by an animal.

*A gutter* is a trough or channel for carrying liquid off.

*A semi-continuous row* is a row of at least twenty units, in particular at least fifty units and more in particular at least one hundred units to over a thousand units. There is no restriction to the special confirmation of the row (being for example straight or curved), and the units do not need to be contiguous It may even be that in between each cage there is an element that is not part of the row of cages), although having a row of contiguous cages is typical in mink farming.

*Water* is any aqueous fluid mainly consisting of water or a fluid freely miscible with water, optionally comprising (naturally present) contaminants or additives such as preservatives, antimicrobials, salts, feed additives, dissolved gases etc.

A *shed* is a structure serving as shelter.

### Embodiments of the invention

In an embodiment of the system according to the invention, wherein the drinking water supply is arranged in the form of a drinking nipple, the drinking nipple extends into the box from the bottom thereof (which includes extending from a site adjacent the bottom). Although in the art, drinking nipples are typically supplied via a side wall of a cage, it has been found that by providing the nipple such that extends from the bottom of the area wherein the animals reside, it is easier for them to find and use the drinking nipple. This allows the nipple to be used at a very young age, from a couple of days up to one or more weeks before a nipple that extends from a side wall could have been used by the same animal. An additional advantage is that the arrangements does not interfere with the space lateral of the cage. This space is typically used for operator movement and machine operations, and any part being present in that space is disadvantageous for the free movement of the operator or machine.

In another embodiment the next box is provided with a gutter to carry spoiled drinking water off to the exterior of the nest box. This decreases the risk of water spoiling the beddings in the nest box, or other parts of the nest box.

In yet another embodiment wherein the system comprises a semi-continuous row of separate cages, each cage being provided with a nest box, the system comprises a water duct running along (which can be aside, on top or underneath) the row of cages, and at each nest box, a conduit for providing a fluid connection between the interior of the water duct and the corresponding drinking nipple.

In a further embodiment the water duct is provided with means to either provide or shut off drinking water supply to the drinking nipple.

In another embodiment the bottom of the nest box is provided with a nest block, the block being provided with a bowl and a plateau, the drinking nipple extending from the plateau into the nest box. A block in this sense is a three dimensional, typically rectangular body, fitting between side walls of the nest box, and having a height of approximately 2-5 cm (but this may also be a different height). The nest block is provided with a bowl that serves as a space to keep the mink kits together. This greatly reduces the risk of hypothermia and therewith kit losses, in particular during the first days after whelping. Also, the block may be made of a material that is more dense and has a larger heat capacity than the typical bedding in a nest box, and thus may serve as an additional means to diminish the risk of hypothermia. The plateau has proven to help the mink kits to access the drinking nipple. Also, the plateau being away from the bowl, reduces the risk of the kits becoming wet by spoiled water (for example water spoiled by the mother animal). Such a nest block thus is a further means to increase animal welfare and has shown to reduce kit losses during the first days after whelping. Preferably the block is contiguous with at least three walls of the box, to nicely fit the box to prevent mink kits from falling of the nest block.

In a further embodiment the drinking nipple is provided with a cut off valve that is actuable by substantially vertical movement of an actuator that extends longitudinally from the nipple. Classical drinking nipples include a ball that fits a bearing. These nipples however leak substantial amounts of water. Other nipples have actuators that need to be pushed sideways to open the valve. These nipples however when used in an upright constitution are prone to stay in the open position by dust or other particles falling into the nipple between the actuator and a side-wall. This risk appears to be almost non-existent if the actuator needs to be moved vertically.

In an embodiment the drinking nipple is situated opposite to an entrance opening of the nest box. This arrangement keeps the mink kits in the nest box for a longer time, which is beneficial for their growth and for the relief of the mother animal.

In an embodiment of the method according to the invention the water supply is provided for minks in a period during the first 4 weeks after the minks are born. In a further embodiment the water supply is provided during the second, third and fourth week after the minks are born. Specifically, the water supply is not provided during the first week after the minks are born.

### Examples

Figure 1 schematically shows a shed for mink farming
Figure 2 schematically shows a few contiguous cages as present in the shed of figure 1
Figure 3 schematically shows a nest block of one cage that is used in the present invention
Figure 4 schematically shows an alternative embodiment of a nest block for use in the present invention
Figure 5 schematically shows a drinking nipple for use in the present invention

### Figure 1

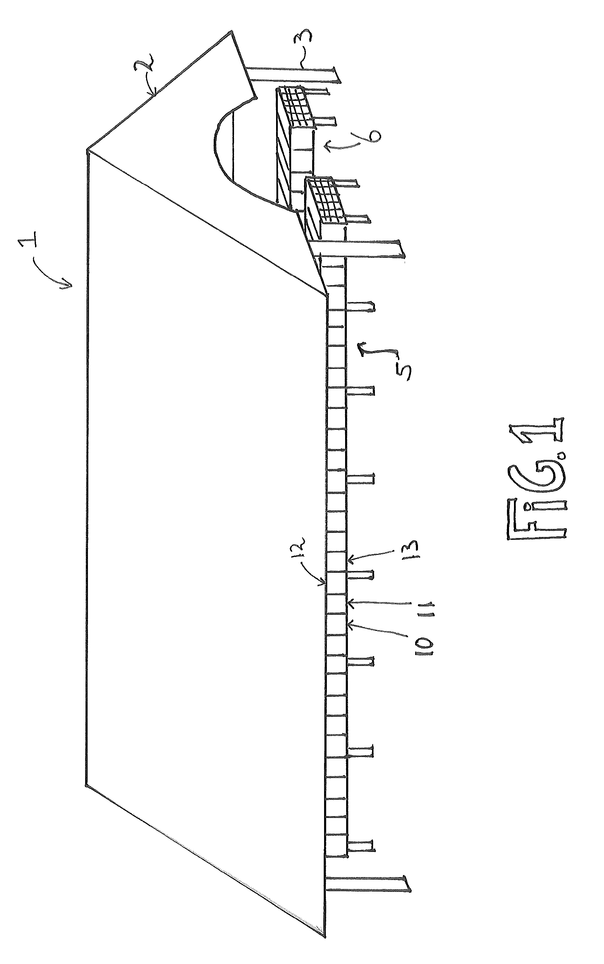

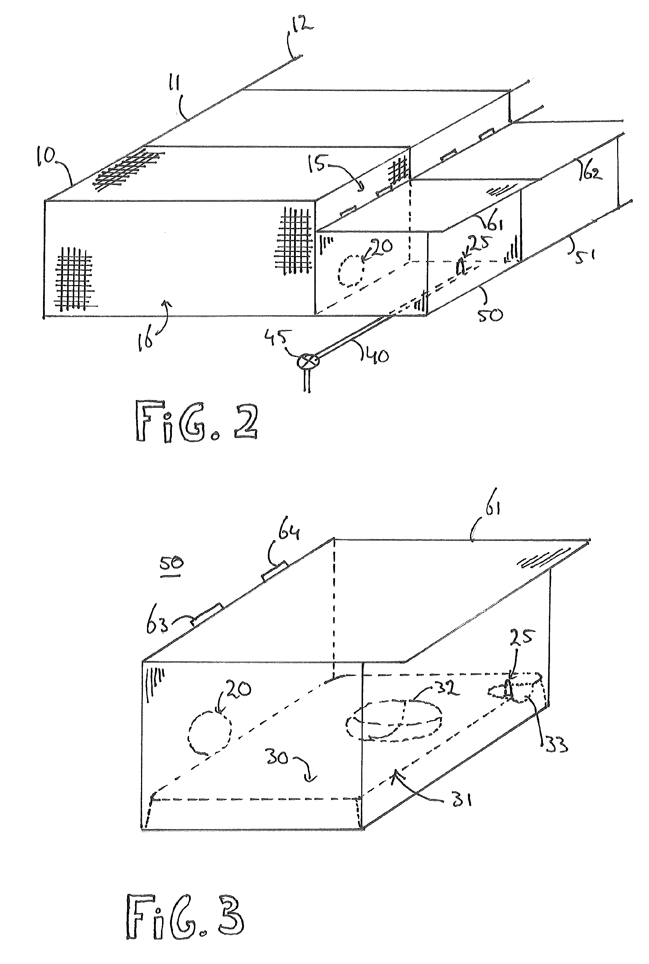

Figure 1 schematically shows a shed 1 for mink farming. In this particular embodiment the shed 1 is an open shed, having a closed roof 2 made of reflective and coated metal, supported by poles 3. There are no side walls to allow wind to blow through the shed. The shed provides shelter for two rows 5 and 6, each row constituting a semi-continuous row of 1200 separate, contiguous wired cages (for reasons of clarity, figure 2 only shows a small number of cages), totalling a length of about 400 meters. Of row 5, four separate cages 10, 11, 12 and 13 are indicated. Each cage is meant breeding minks to live in, in particular one adult mother mink having a number of mink kits that live with the mother in the same cage.

### Figure 2

Figure 2 schematically shows a few contiguous cages 10, 11 and 12 (partly) as present in the shed of figure 1. Each shed is a wired cage. For reasons of clarity, only part of the wire meshes are shown in figure 2. Of the first cage 10, part of the wire meshes of the side wall 16 are depicted. Of the front wall 15 also part the wire meshes are depicted. Of cages 11 and 12 no wire meshes are shown in figure 2.

In front of the cages there are nest boxes 50 and 51 depicted, corresponding to cages 10 and 11. These nest boxes are made of solid wood and have hinged lids 61 and 62 respectively. The lids can be opened by an operator (not shown) to inspect the interior of the boxes and if necessary to perform an operation in the nest boxes. Each nest box has an opening 20 into the corresponding wired cage. Opening 20 of next box 50 is depicted in a dashed circle. Underneath the nest boxes there is provided a water duct 40 that is used for supplying drinking water to each of the cages 10, 11, 12 and 13. The duct is provided with a valve 45 to open the water supply. In each cage there is a vertical drinking nipple (nipple 25 is depicted for nest box 50) that is in fluid connection with duct 40. For this, the nipple extends from the bottom of the nest box into the interior of this box.

### Figure 3

Figure 3 schematically shows a nest box 50 of one cage that is used in the present invention in more detail, and with an additional nest block 30 arranged in the interior of the nest box 50.

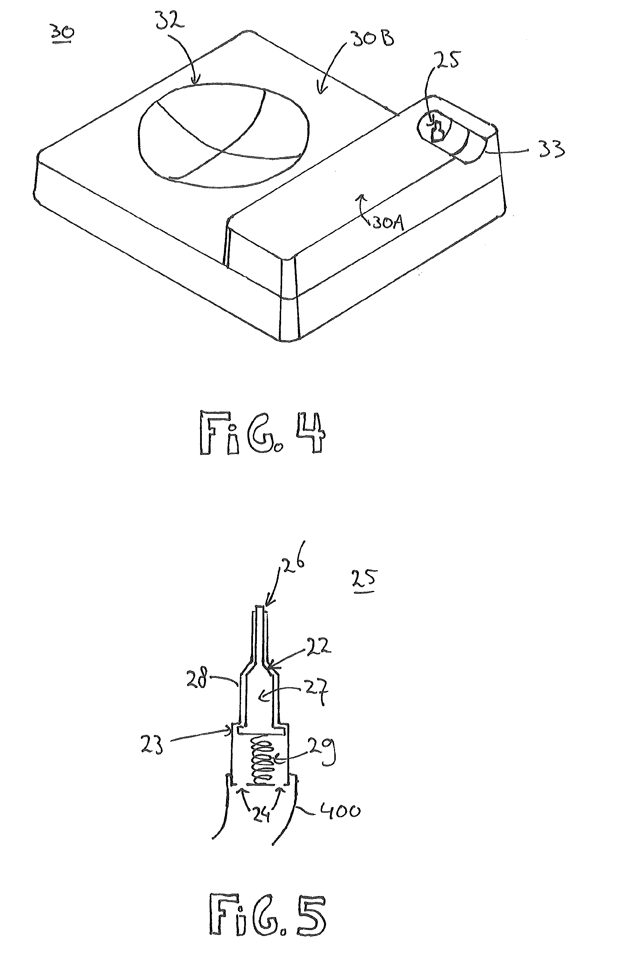

The box 50 has a lid 61, as indicated in figure 2, which lid is hinged by hinges 63 and 64. On the bottom of the nest box, instead of the traditional wood shavings that cover the wired bottom (not shown), there is provided a three-dimensional nest block 30. This block is constituted from pulped organic material. This material can decompose easily but holds long enough to be used through the entire breeding period. The nest block in this embodiment fits the nest box 50. It is provided with a bowl 32 that serves as the site where the mink kits stay during the first few days of their live. Here they can advantageously use each other's body heat and, due the relatively large heat capacity of the nest block when compared to wood shavings or other typical bedding material, they suffer less from hypothermia. The nest block has a plateau 31 which may serve for the kits to move over and may serve to provide food if necessary. In a corner of the plateau, a groove 33 is provided which may serve as a gutter for drinking water spoiled by minks using drinking nipple 25. The spoiled water is carried off outside the nest box via the side of the nest block through the wired bottom of the box. The nest block has the drinking nipple as an integral part of it. When fitting the nest block into the nest box, the drinking nipple is simply clicked on an upward extension (see figure 5) of water duct 40 (not shown), thereby creating a fluid (but watertight) connection between the water duct and the drinking nipple. When disposing of the nest block, the drinking nipple may be re-used.

### Figure 4

Figure 4 schematically shows an alternative embodiment of a nest block 30 for use in the present invention. This nest block has two plateaus, one being elevated (30A) and one serving as the basis for bowl 32. The elevated plateau 30A is provided with drinking nipple 25, arranged in a gutter 33.

### Figure 5

Figure 5 schematically shows a drinking nipple 25 for use in the present invention. This nipple has a housing 28 that is connected to upward extension 400 of water duct 40 (not shown). Within the housing 28 there is provided an actuator 27 that is pushed upwardly by a spring 29. This way, in a closed position that actuator cuts off the fluid passageway from extension 400 to opening 26 by providing two closures at sites 22 and 23 respectively. In the shown configuration, a mink (not shown) has pushed down actuator 27, and therewith provides a passageway for water along the actuator to opening 26.

This way, water can flow from extension 400, through holes 24, along sites 23 and 22 to opening 26 to allow the mink to drink water.

## Claims

1. System for increasing animal welfare of breeding minks kept in in a cage, comprising a semi-closed nest box in connection with the cage, **characterised in that** a drinking water supply is present in the nest box.

2. A system according to claim 1, wherein the drinking water supply is arranged in the form of a drinking nipple, **characterised in that** the drinking nipple extends into the box from the bottom thereof.

3. A system according to any of the preceding claims, **characterised in that** the next box is provided with a gutter to carry spoiled drinking water off to the exterior of the nest box.

4. A system according to any of the preceding claims, wherein the system comprises a semi-continuous row (5, 6) of separate cages (10, 11, 12, 13), each cage being provided with a nest box, **characterised in that** the system comprises a water duct (30) running along the row of cages, and at each nest box, a conduit (31, 32, 33) for providing a fluid connection between the interior of the water duct (30) and the corresponding drinking nipple.

5. A system according to claim 4, **characterised in that** the water duct is provided with means to either provide or shut off drinking water supply to the drinking nipple.

6. A system according to any of the preceding claims, **characterised in that** the bottom of the nest box is provided with a nest block, the block being provided with a bowl and a plateau, the drinking nipple extending from the plateau into the nest box.

7. A system according to any of the claims 2-6, **characterised in that** the drinking nipple is provided with a cut off valve that is actuable by substantially vertical movement of an actuator that extends longitudinally from the nipple.

8. A system according to any of the preceding claims, **characterised in that** the drinking nipple is situated opposite to an entrance opening of the nest box.

9. A method of using a system according to any of the preceding claims, wherein the water supply is provided for minks in a period during the first 6 weeks after the minks are born.

10. A method according to claim 9, **characterised in that** the water supply is provided for minks in a period during the first 4 weeks after the minks are born.

11. A method according to claims 9 and 10, **characterised in that** the water supply is provided during the second, third and fourth week after the minks are born.

12. A method according to claim 11, **characterised in that** the water supply is not provided during the first week after the minks are born.
